(19) Europäisches Patentamt
European Patent Office
Office européen des brevets

(11) EP 2 746 435 A2

(12) **EUROPEAN PATENT APPLICATION**
published in accordance with Art. 153(4) EPC

(43) Date of publication:
**25.06.2014 Bulletin 2014/26**

(21) Application number: **12824658.4**

(22) Date of filing: **16.08.2012**

(51) Int Cl.:
***D01F 6/62*** *(2006.01)* ***D01D 5/08*** *(2006.01)*
***D02J 1/22*** *(2006.01)* ***D03D 15/00*** *(2006.01)*

(86) International application number:
**PCT/KR2012/006525**

(87) International publication number:
**WO 2013/025062 (21.02.2013 Gazette 2013/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.08.2011 KR 20110081904**
**17.08.2011 KR 20110081903**
**16.08.2012 KR 20120089361**

(71) Applicant: **Kolon Industries, Inc.**
**Gwacheon-si, Gyeonggi-do 427-709 (KR)**

(72) Inventors:
- **KIM, Young-Jo**
**Gimpo-si**
**Gyeonggi-do 415-060 (KR)**
- **AN, Byoung-Wook**
**Incheon 407-765 (KR)**
- **LEE, Sang-Mok**
**Gumi-si**
**Gyeongsangbuk-do 730-020 (KR)**
- **LEE, Young-Soo**
**Gumi-si**
**Gyeongsangbuk-do 730-030 (KR)**
- **KIM, Gi-Woong**
**Daegu 706-020 (KR)**

(74) Representative: **Merkle, Gebhard**
**Ter Meer Steinmeister & Partner**
**Mauerkircherstrasse 45**
**81679 München (DE)**

(54) **METHOD FOR MANUFACTURING A POLYESTER YARN**

(57) The present invention relates to polyester fiber that can be used as fabric for an airbag. In particular, the present invention relates to a process for producing polyester fiber comprising conducting an esterification reaction of a dicarboxylic acid composition and glycol in a predetermined ratio; conducting a polycondensation reaction of the oligomer produced by the esterification reaction; conducting a solid state polymerization of the polymer produced by the polycondensation; and melt spinning and drawing the polyester chip produced by the solid state polymerization, fiber for an airbag produced thereby, and fabric for an airbag comprising the same.

The polyester fiber prepared according to the present invention has low modulus, high strength, and high contraction. And, the polyester fiber of the present invention may significantly lower stiffness and achieve excellent mechanical properties, thus providing excellent packing property, shape stability and gas barrier effect when used as fabric for an airbag.

FIG. 1

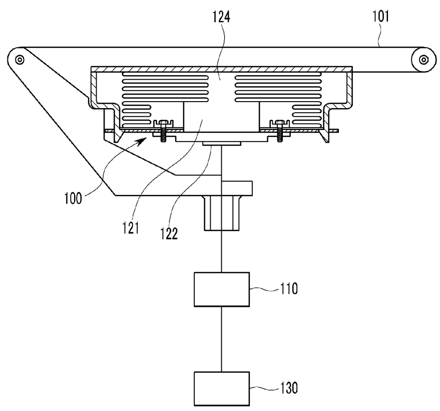


EP 2 746 435 A2

**Description**

## BACKGROUND OF THE INVENTION

### (a) Field of the Invention

The present invention relates to polyester fiber that can be used as fabric for an airbag. More particularly, the present invention relates to polyester fiber that can be used as fabric for an airbag to a process for producing polyester fiber which has excellent packing property, flexibility, shape stability, and improved gas barrier property when the airbag is unfolded, and fiber and fabric for an airbag prepared therefrom.

### (b) Description of the Related Art

Generally, an airbag is a device for protecting a driver and passengers, in which a crash impact is detected by an impact detecting sensor when driving vehicles collide head-on at a speed of about 40 km/h or higher, and consequently, gunpowder explodes to supply gas into an airbag cushion to inflate the airbag. A general structure of an airbag system is depicted in FIG. 1.

As depicted in FIG. 1, the conventional airbag system includes: an inflator 121 that generates a gas by ignition of a detonator 122; an airbag module 100 that includes an airbag 124 that is expanded and unfolded toward a driver on the driver's seat by the generated gas, and is installed in a steering wheel 101; an impact sensor 130 that gives an impact signal when the vehicle has crashed; and an electronic control module 110 that ignites the detonator 122 of the inflator 121 according to the impact signal. In such airbag system, the impact sensor 130 detects the impact and sends the signal to the electronic control module 110 when the vehicle collides head-on. At this time, the electronic control module 110 that received the signal ignites the detonator 122 and a gas generator in the inflator 121 is combusted. The combusted gas generator rapidly generates the gas to expand the airbag 124. The expanded airbag 124 contacts the front upper body of the driver and partially absorbs the impact load caused by the collision, and when the driver's head and chest go forward according to the law of inertia and smash against the airbag 124, it further absorbs the shock toward the driver by rapidly discharging the gas from the airbag 124 through discharging holes formed on the airbag 124. Therefore, the airbag effectively absorbs the shock that is delivered to the driver at the time of a collision, and can reduce secondary injuries.

As disclosed above, an airbag used in a vehicle is prepared in a certain shape and is installed in the steering wheel, door roof rails, or side pillars of the vehicle in a folded form so as to minimize its volume, and it is expanded and unfolded when the inflator 121 operates.

Therefore, it is very important that the airbag has folding property and flexibility for reducing the shock to the occupant in addition to good mechanical properties of the fabric for effectively maintaining the folding and packaging properties of the airbag when it is installed in a vehicle, preventing damage to and rupture of the airbag itself, providing good unfolding properties of the airbag cushion, and minimizing the impact provided to the occupant. However, an airbag fabric that can maintain superior air-tightness and flexibility for the occupant's safety, sufficiently endure the impact applied to the airbag, and be effectively installed in a vehicle has not yet been suggested.

Previously, a polyamide fiber such as nylon 66 or the like has been used as the raw material of the fiber for an airbag. However, nylon 66 has superior impact resistance but has drawbacks of being inferior to polyester fiber in terms of moisture and heat resistance, light resistance, and shape stability, and being expensive.

Meanwhile, Japanese patent publication No. Hei 04-214437 suggested the use of a polyester fiber for reducing such defects. However, when the airbag was prepared by using the prior polyester fiber, it was difficult to install the airbag in a narrow space in a vehicle because of its high stiffness and low flexibility, and thus foldability was lowered, and significant impact may be applied to a passenger when the airbag cushion is developed. And, due to the property of polyester that significant decomposition is generated by moisture or heat, and the like, there is a limitation in maintaining sufficient mechanical properties and unfolding performance under severe conditions of high temperature and high moisture, and thus, it was hardly applied commercially.

Therefore, it is needed to develop fiber yarn that maintains superior shape stability and gas barrier effect so as to be suitably used as fabric for an airbag, and also maintains flexibility for reducing the impact applied to passengers, the packing property, and superior mechanical properties under severe conditions of high temperature and high humidity.

## SUMMARY OF THE INVENTION

It is an object of the present invention to provide a process for producing polyester fiber that exhibits flexibility and mechanical properties optimized as fiber for an airbag, and thus may provide an airbag cushion which may exhibit more improved foldability and unfolding performance, and simultaneously minimize impact to a passenger when unfolded.

It is another object of the present invention to provide polyester fiber prepared according to the process.

It is still another object of the present invention to provide fabric for an airbag prepared using the polyester fiber.

The present invention provides a process for producing polyester fiber comprising the steps of: conducting an esterification reaction of a dicarboxylic acid composition comprising at least two kinds of dicarboxylic acid compounds with glycol; conducting a polycondensation reaction of the oligomer produced by the esterification; conducting a solid state polymerization of the polymer produced by the polycondensation; and melt spinning and drawing the polyester chip produced by the solid state polymerization, wherein the dicarboxylic acid composition comprises C6-24 aromatic dicarboxylic acid and C2-24 aliphatic dicarboxylic acid, and the mole ratio of the aromatic dicarboxylic acid and the aliphatic dicarboxylci acid is 1:0.01 to 1:0.15; or the dicarboxylic acid composition comprises terephthalic acid and at least one isomer of terephthalic acid selected from the group consisting of isophthalic acid and phthalic acid, and the mole ratio of the terephthalic acid and the isomer is 1:0.01 to 1:0.12, and the mole ratio of the total amount of the dicarboxylic acid compounds and the glycol is 1:1 To 1:1.5.

Further, the present invention provides polyester fiber prepared by the above method.

Further, the present invention also provides fabric for an airbag prepared using the polyester fiber.

## DETAILED DESCRIPTION OF THE EMBODIMENTS

Hereinafter, a polyester fiber according to specific embodiments of the present invention, a production method thereof, and a fabric for an airbag produced therefrom will be described in more detail. However, these are set forth to illustrate the present invention, and the scope of the present invention is not limited thereto. It will be obvious to those skilled in the art that various modifications and changes are possible within the scope of the present invention.

Additionally, as long as not particularly described in the entire specification, "includes" or "contains" means to include any component (or constituent) without particular limitation, and the addition of another component (or constituent) is not excluded.

Polyester fabric for an airbag may be produced by melt-spinning polymer containing polyethylene terephthalate (hereinafter, referred to as "PET") to prepare undrawn fiber, drawing the undrawn fiber to obtain drawn fiber (namely, fiber), and weaving the polyester fiber. Therefore, the characteristics of the polyester fiber are directly or indirectly reflected in the physical properties of polyester fabric for an airbag.

Particularly, in order to apply the polyester to fiber for an airbag instead of the prior polyamide fiber such as nylon 66 or the like, the disadvantages of the prior polyester fiber such as a low folding property due to its high modulus and stiffness, a reduction in physical properties under severe conditions of high temperature and high humidity due to its low melt heat capacity, and a decline in unfolding performance thereby must be overcome.

Polyester has a stiffer structure than nylons in terms of molecular structure, and thus has a characteristic of high modulus. Therefore, the packing property remarkably deteriorates, when it is used in a fabric for an airbag and installed in a vehicle. Furthermore, carboxyl end groups (hereinafter, referred to as "CEG") in the polyester molecular chain attack ester bonds under high-temperature and high-humidity conditions to cause chain scission, and it causes deterioration of the physical properties after aging.

Thus, in the present invention, by using a specific dicarboxylic acid composition and glycol, which is dihydric alcohol, in the optimum ratio in the process of producing polyester fiber, the prepared polyester fiber may have significantly lowered stiffness, and simultaneously have excellent toughness, tear strength, edgecomb resistance, and the like, and maintain high gas barrier property, and thus, it may be effectively applied for fabric for an airbag.

Particularly, as the result of experiments, it was found out that when the polyester fiber prepared using optimized compositional ratio and process conditions is applied for fabric for an airbag, more improved foldability, shape stability, and gas barrier effect may be achieved, and thus, more excellent packing property may be achieved when the airbag is installed in an automobile, and the like, and excellent mechanical properties, air leakage prevention, air-tightness, and the like may be maintained even under severe conditions of high temperature and high moisture.

Thus, according to one embodiment of the invention, a method for producing polyester fiber is provided. The process for producing polyester may comprise the steps of: conducting an esterification reaction of a dicarboxylic acid composition comprising at least two kinds of dicarboxylic acid compounds with glycol; conducting a polycondensation reaction of the oligomer produced by the esterification; conducting a solid state polymerization of the polymer produced by the polycondensation; and melt spinning and drawing the polyester chip produced by the solid state polymerization. In the esterification reaction step, the dicarboxylic acid composition may comprise aromatic dicarboxylic acid having carbon number of 6 to 24 and aliphatic dicarboxylic acid having carbon number of 2 to 24, and the mole ratio of the aromatic dicarboxylic acid and the aliphatic dicarboxylci acid may be 1:0.01 to 1:0.15; or, the dicarboxylic acid composition may comprise terephthalic acid and at least one isomer of terephthalic acid selected from the group consisting of isophthalic acid and phthalic acid, and the mole ratio of the terephthalic acid and the isomer may be 1:0.01 to 1:0.12. And, in the esterification reaction step, the dicarboxylic acid and the glycol may be reacted in the mole ratio of the total amount of the dicarboxylic acids including aromatic dicarboxylic acid, aliphatic dicarboxylic acid, and the like, and the

glycol, or in the mole ratio of the total amount of terephthalic acid and isomers thereof, i.e., isophthalic acid or phthalic acid, and the glycol of 1:1 to 1:15.

Hereinafter, a process of producing the polyester fiber will be described in more detail with respect to each step.

First, the melt-spinning and drawing processes according to the present invention will be briefly described with reference to the attached drawings such that it can be easily carried out by a person with ordinary skill in the related art.

FIG. 2 is a schematic view showing a process of producing a polyester fiber, including the melt-spinning and drawing steps, according to an embodiment of the present invention. As shown in FIG. 2, in the method of producing the polyester fiber for an airbag of the present invention, the polyester polymer prepared in the above described manner is molten, the molten polymer is spun by a spinning nozzle and cooled by quenching air, an emulsion is provided to the undrawn fiber using an emulsifying roll (or oil jet) 220, and then the emulsion provided to the undrawn fiber is uniformly dispersed at a predetermined pressure using a pre-interlacer 230. Subsequently, the undrawn fiber is drawn by multi-step drawing rollers 241 to 246, the drawn fibers are intermingled at a predetermined pressure by a second interlacer 250, and then the intermingled drawn fiber is rolled by a winding roller 260, so as to produce a fiber.

Meanwhile, according to the process of the present invention, in order to prepare high strength, low modulus and high contraction polyester fiber that can be effectively used as fabric for an airbag, polyester polymer with high viscosity may be prepared first and used. Particularly, the polyester polymer may be prepared by the esterification reaction of a dicarboxylic acid composition comprising at least two kinds of dicarboxylic acid compounds with glycol. More specifically, the polyester polymer may be prepared by the esterification reaction of C6-24 aromatic dicarboxylic acid and C2-24 aliphatic dicarboxylic acid with glycol, or by the esterification reaction of terephthalic acid or isomers thereof with glycol. The prepared polyester polymer has high intrinsic viscosity and low carboxylic end group (CEG) content, and thus, when processed into polyester fiber, the fiber may maintain excellent mechanical properties and air leak prevention, air tightness, and the like even after aging under sever conditions of high temperature and high moisture, and may be effectively applied for fabric for an airbag.

Particularly, the polyester polymer may be prepared by the process comprising conducting an esterification reaction of C6-24 aromatic dicarboxylic acid and C2-24 aliphatic dicarboxylic acid with glycol; onducting a polycondensation reaction of the oligomer produced by the esterification reaction; conducting a solid state polymerization of the polymer produced by the polycondensation; and melt spinning and drawing the polyester chip produced by the solid state polymerization. Alternatively, the polyester polymer may be prepared by the process comprising conducting an esterification reaction of terephthalic acid, and at least one isomer thereof selected from the group consisting of isophthalic acid and phthalic acid with glycol; conducting a polycondensation reaction of the oligomer produced by the esterification reaction; conducting a solid state polymerization of the polymer produced by the polycondensation; and melt spinning and drawing the polyester chip produced by the solid state polymerization.

The esterification reaction is conducted using a dicarboxylic acid composition comprising at least two kinds of dicarboxylic acid compounds. The dicarboxylic acid composition may comprise C6-24 aromatic dicarboxylic acid and C2-24 aliphatic dicarboxylic acid, or terephthalic acid and at least one isomer of terephthalic acid selected from the group consisting of isophthalic acid and phthalic acid.

In case C6-24 aromatic dicarboxylic acid and C2-24 aliphatic dicarboxylic acid are used together as the dicarboxylic acid composition, the C6-24 aromatic dicarboxylic acid may include at least one selected from the group consisting of p-phthalic acid, m-phthalic acid, o-phthalic acid, diphenhyletherdicarboxylic acid, biphenyldicarboxylic acid, 1,4-naphthalene dicarboxylic acid, 1,5-naphthalene dicarboxylic acid and esterforming derivatives thereof. Among them, terephthalic acid may be preferably used considering economical efficiency and properties of the final product, and the like.

And, the C2-24 aliphatic dicarboyxlic acid that is used together with the aromatic dicarboxylci acid to conduct the esterification reaction with glycol may include at least one selected from the group consisting of oxalic acid, malonic acid, succinic acid, glutaric acid, adipic acid, pimelic acid, suberic acid, azelaic acid, sebacic acid, and esterforming derivatives thereof. Among them, adipic acid may be preferably used together with terephthalic acid, and the like considering an economical efficiency and the properties of the final product.

Meanwhile, in case p-phthalic acid and at least one isomer of terephthalic acid are used together as the dicarboxylic acid composition, it is preferable to use isophthalic acid together with terephthalic acid considering an economical efficiency and the properties of the final product, and the like.

In the present invention, the glycol that can be used to conduct the esterification reaction with the dicaboxylic acid composition, i.e., dicarboxylic acid ingredients may include at least one selected from the group consisting of C2-16 aliphatic diol, C6-24 cycloaliphatic diol, C6-24 aromatic diol, and ethylene oxide or propylene oxide adducts thereof. More particularly, the glycol that can be used for producing the polyester of the present invention may be alkane diol having 2-16 carbon atoms such as ethylene glycol, 1,2-propane diol, 1,3-propane diol, 1,3-butane diol, 1,4-butane diol, 1,5-pentane diol, 1,6-hexane diol, 1,7-heptane diol, 1,8-octane diol, 1,9-nonane diol, 1,10-decane diol, 1,12-dodecane diol, diethylene glycol, trimethyleneglycol, tetramethylene glycol, hexamethylene glycol, triethyleneglycol, tetraethylene glycol, tetramethylethylene glycol, pentaethylene glycol, hexaethylene glycol, octaethylene glycol, dipropyleneglycol, tripropyleneglycol, and the like; cycloaliphatic diol having 6-24 carbon atoms such as cyclohexanediol, cyclohexane

dimethanol, cyclohexanediethanol, cyclohexanedipropanol, cyclohexanedibutanol, cyclohexanedipentanol, cyclohexanedimethanol, cyclopentanedimethanol, and the like; and aromatic diol having 6-24 carbon atoms such as bisphenol A, bisphenol S, and the like, and ethylene oxide or propylene oxide adducts thereof.

As described above, the polyester polymer of the present invention can be produced by application of a terephthalic acid (TPA) method including esterification of a dicarboxylic acid and a dihydric alcohol, glycol. A general polyester TPA method is a direct reaction of the dicarboxylic acid and the glycol, and is a self acid-catalyzed reaction without using other catalysts in the esterification reaction. For example, polyethylene terephthalate (PET) may be directly prepared by the esterification reaction of terephthalic acid and ethylene glycol, as shown in the following Reaction scheme 1.

[Reaction scheme 1]

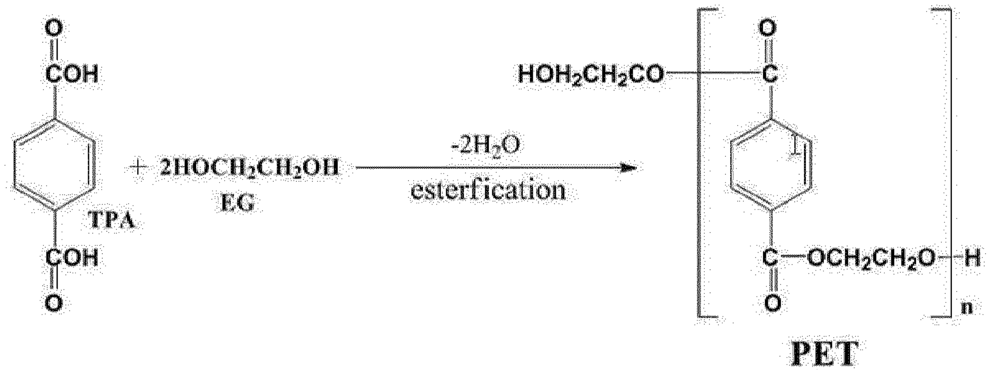


In the TPA reaction, it is needed to maintain a high temperature because of the insolubility and low reactivity of the dicarboxylic acid. The oligomer prepared by the above method can be polymerized into a polymer having a specific viscosity by carrying out a polycondensation reaction at a high temperature while adding a catalyst under a high vacuum condition. The prepared polymer is discharged through a nozzle by using a gear pump or a high pressure inert gas ($N_2$). The discharged polymer is solidified in cooling water and cut into an adequate size.

When the polyester is produced by the conventional TPA method, the final polyester polymer prepared has plenty of carboxyl end groups, because the esterification and polycondensation reactions at a high temperature cause thermal degradation and generate carboxyl end groups and the dicarboxylic acid having carboxyl end groups is used as the raw material. Furthermore, when the polyester fiber having plenty of carboxyl end groups is applied to the fabric for an airbag, the carboxyl end group that exists as an acid under the high temperature and high humidity conditions causes scission of a molecular chain and deteriorates the properties of the fabric, as disclosed above. In this regard, in the present invention, the polycondensation and solid state polymerization are conducted at low temperature under mild conditions, thus minimizing the content of carboxyl end group, and end carboxyl groups and hydroxyl groups are bonded through additional solid state polymerization to increase molecular weight of the polymer as well as to decrease the content of CEG.

Meanwhile, in case polyester is prepared using dicarboxylic acid and ethyleneglycol according to a common TPA method, and processed into fabric, the strength of the fabric may be lowered due to low contraction rate compared to nylon, and thus, air permeability may be significantly lowered, the fabric may be slipped at a seam, and tear strength may also be lowered. And, if an airbag is prepared using such fabric, airbag may be damaged by high pressure when the airbag is unfolded, and thus, it cannot function for protecting a passenger, which is the existing function of the airbag.

Therefore, in the present invention, in the preparation of polyester polymer, a dicarboxylic acid composition comprising at least two kinds of specific dicarboxylic acid compounds, and glycol are added together in a predetermined ratio, and subjected to an esterification reaction and polycondensation, thus preparing high contraction fiber with high strength low modulus. Specifically, by using at least two kinds of specific dicarboxylic acid compounds in combination in the esterification reaction with glycol, namely, by adding aliphatic dicarboyxlic acid together with aromatic dicarboxylic acid or adding isophthalic acid, phthalic acid, and the like together with terephthalic acid as a dicarboyxlic acid composition, a linear structure may be introduced in the molecular chain instead of a benzene ring, or the linear structure of the molecular chain may be made into a coil structure, and stiffness of the molecular chain may be removed to decrease attraction between molecules. Thereby, a free moving state of the molecule itself may be achieved, and thus, a structure that can be easily deformed by heat, i.e., that can be easily contracted by heat may be obtained. And, according to the present invention, low temperature spinning is conducted using a high viscosity chip to minimize spinning tension at a delayed cooling part, and high viscosity filament may be obtained thus preparing high strength high contraction fiber

with low draw ratio.

And, the polyester fiber obtained by the reaction of glycol and at least two kinds of specific dicarboxylic acid compounds has high contraction as well as low modulus and high strength. If airbag fabric is prepared using such fiber, tearing of the fabric by internal pressure may be prevented when the airbag is unfolded, and air permeability may be improved, and thus, the airbag may function for protecting a passenger from impact.

Meanwhile, the esterification reaction of dicarboxylic acid and glycol may be carried out according to a conventional method known as the TPA method, and is not particularly limited to special processing conditions.

However, according to a preferable embodiment of the invention, in the esterification reaction step, the mole ratio of dicarboxylic acid and glycol, namely, the mole ratio of the total amount of aromatic dicarboxylic acid and aliphatic dicarboxylic acid, and glycol, or the mole ratio of the total amount of dicarboxylic acid including terephthalic acid and isophthalic acid, phthalic acid, and the like, and glycol may be 1:1 to 1:1.5, preferably 1:1.1 to 1:1.45, more preferably 1:1.1 to 1:1.4. The mole ratio of the dicarboxylic acid and the glycol may be 1:1 or more in terms of improvement in process efficiency of polymerization, and may be 1:1.5 or less in terms of improvement in the properties of the prepared polymer including CEG and DEG, and the like.

And, in the dicarboxylic acid composition that reacts with the glycol, the at least two kinds of dicarboxylic acid compounds may maintain a predetermined mole ratio range. More specifically, in the dicarboxylic acid composition, the mole ratio of the aromatic dicarboxylic acid and the aliphatic dicarboxylic acid may be 1:0.01 to 1:0.15, preferably 1:0.01 to 1:0.14, more preferably 1:0.01 to 1:0.13. The mole ratio of aliphatic diol and cycloaliphatic diol may be 1:0.01 or more in order to manifest excellent properties when processing fabric for an airbag, and it may be 1:0.15 or less in order to improve fiber producing process efficiency. Meanwhile, in the dicarboxylic acid composition, the mole ratio of terephthalic acid and isomers thereof such as isophthalic acid, phthalic acid, and the like may be 1:0.01 to 1:0.12, preferably 1:0.01 to 1:0.11, more preferably 1:0.01 to 1:0.1. The mole ratio of the terephthalic acid and isomers thereof such as isophthalic acid, phthalic acid, and the like may be 1:0.01 or more in order to manifest excellent properties when processing fabric for an airbag, and it may be 1:0.12 or less in order to improve fiber producing process efficiency.

The esterification reaction may be carried out at a temperature of 230 to 300 °C and preferably 250 to 290 °C, or 250 to 280 °C, and the reaction time may be 2 to 7 hours, and preferably 3 to 5 hours. At this time, the reaction time and the reaction temperature may be controlled, considering the properties of the polymer and productivity improvement.

Furthermore, the polycondensation reaction may be carried out at a temperature of 250 to 290 °C, and preferably 270 to 285 °C under a pressure of 2 Torr or less, and preferably 1 Torr or less. At this time, the reaction time may be 2 to 5, hours, and preferably 3 to 4 hours. The reaction time and the reaction temperature may be controlled, considering the properties of the polymer and productivity improvement.

Particularly, the polycondensation reaction may control the viscosity and CEG of molten polymer through low temperature polymerization, and the intrinsic viscosity of the polymer produced by polycondensation may be controlled to 0.25 dl/g or more, or 0.25 dl/g to 0.80 dl/g, preferably 0.4 dl/ g or more, more preferably 0.5 dl/ g or more, in order to minimize end carboxylic acid groups of the polymer.

The polymer prepared by the polycondensation may be used with a minimized chip size, namely, with an increased specific surface area, so as to minimize internal/external reaction difference and increase reaction speed in the subsequent solid state polymerization step. And, in order to increase the specific surface area of the polymer prepared by the polycondensation, the chip may be cut to a size of 1.0 g/100ea to 3.0 g/100ea, more preferably 1.5 g/100ea to 2.5 g/100ea, and the solid state polymerization may be conducted.

The polymer chip may be made into a spherical form so as to prevent sticking when solid state polymerization is conducted. The spherical polymer chip such as in the form of a ball or a bead may be prepared by underwater cutting. The polymer chip may be prepared, for example, by cutting the polymer with a rotated knife in the water to make a pellet. Particularly, since the underwater cut polymer pellet is surrounded by water immediately after begin cut, adhesion between pellets may be minimized, and the pellet may become almost a spherical shape until cooled. Specifically, since polymer has elastomeric characteristic, it is rolled up and the chip may be produced in the oval or almost spherical shape. The spherical polymer chip may have a cross section in the form of a circle or an ellipse. And, the polymer chip may be prepared with surface roughness ($R_{max}$) of 1 more by making scratch, and the like on the chip surface, in order to prevent sticking when solid state polymerization is conducted.

The solid state polymerization reaction may be carried out at a temperature of 170 to 240 °C, for example, 170 to 225 °C or 200 to 240 °C, and preferably 180 to 220 °C or 205 235 °C, and at a pressure of 2 Torr or lower, and preferably 1 Torr or lower. The reaction time may be 10 hours or longer, or 10 to 40 hours. The reaction time and the reaction temperature may be controlled, considering the final viscosity and spinnability improvement.

In the present invention, the polycondensation reaction of the melt polymerization is carried out under more mild conditions of a low temperature, and the solid state polymerization is carried out as a further reaction at the same time, so that the produced carboxyl end group (CEG) is bonded with the hydroxyl group to reduce the CEG content and to increase the molecular weight of the polymer.

The polyester polymer (chip) produced by the solid state polymerization may have the intrinsic viscosity of 0.7

dl/g or more, or 0.7 to 2.0 dl/g, preferably 0.85 dl/g or more, and more preferably 0.90 dl/g or more, which is preferable in terms of improvement of the physical properties of the fiber and the spinnability. When the intrinsic viscosity of the chip is 0.7 dl/g or more, the fiber having the preferred characteristics of high strength and high breaking elongation can be produced. However, as disclosed above, in order to produce the polyester fiber having high strength and low modulus, it is preferred that, in a process of preparing undrawn fiber, high-viscosity polyester polymer, for example, polyester polymer having an intrinsic viscosity of 0.85 dl/g or more is used to maintain high viscosity, thereby effectively exhibiting high strength at a low draw ratio, and thus effectively decreasing the modulus. Further, in order to prevent the molecular chain scission of the polyester polymer by the increasing melting temperature of the polyester polymer and to prevent increase in spinning pressure by the amount of the polyester polymer discharged from a spinning machine, it is more preferred that a polyester polymer having an intrinsic viscosity of 2.0 dl/g or less is used.

Further, in order to maintain excellent physical properties even under conditions of high temperature and high humidity when the polyester fiber is prepared and applied to the fabric for an airbag, it is preferred that the CEG content in the molecule of the polyester polymer is in the range of 30 meq/kg or less. Here, when the CEG content of the polyester polymer is maintained in a low range even after melt-spinning and drawing processes, the finally produced polyester fiber can preferably exhibit excellent physical properties such as high strength, excellent shape stability and mechanical properties under severe conditions. In this aspect, when the CEG content of the polyester polymer is more than 30 meq/kg, the CEG content in the molecule of the polyester fiber finally produced by melt-spinning and drawing processes is excessively increased to such a degree of more than 30 to 50 meq/kg, and an ester bond is cut by CEG under a condition of high humidity, thereby causing deterioration in the physical properties of the fiber itself and the fabric made therefrom.

Preferably, the polyester polymer includes polyethylene terephthalate (PET) as a main component, and may preferably include 70 mol % or more, and more preferably 90 mol% or more thereof in order to secure mechanical properties as the fiber for the airbag.

Meanwhile, in the process for producing the polyester fiber of the present invention, the polyester polymer having high intrinsic viscosity and low CEG content is melt-spun to prepare undrawn polyester fiber.

In this case, in order to obtain undrawn polyester fiber having low initial modulus and high elongation, the melt-spinning process may be preferably performed at low temperature such that the thermal decomposition of the polyester polymer is minimized. Particularly, in order to minimize the deterioration in physical properties such as intrinsic viscosity and CEG content of the high-viscosity polyester polymer, that is, in order to maintain high viscosity and low CEG content of the polyester polymer, the spinning process may be performed at a low temperature, for example, 260 to 300 °C, for example, 260 to 290 °C, or 270 to 300 °C. In order to conduct an efficient spinning process, the spinning process may be preferably conducted at a temperature of 270 °C or more, more preferably 275 °C or more, still more preferably 280 °C or more. Here, spinning temperature designates the extruder's temperature. When the melt-spinning process is performed at higher than 290 °C or 300 °C, a large amount of the polyester polymer is thermally decomposed, and thus the intrinsic viscosity thereof becomes low, resulting in decrease in the molecular weight thereof and increase in the CEG content thereof. Undesirably, the physical properties of the fiber can be deteriorated by the surface damage of the fiber. In contrast, when the melt-spinning process is performed at lower than 260 °C or 270 °C, it is difficult to melt the polyester polymer, and the spinnability may be deteriorated due to N/Z surface cooling. Therefore, it is preferred that the melt-spinning process is performed in the above temperature range.

From the test results, it was found that, when the melt-spinning process of the polyester polymer is performed at such a low temperature, the decomposition of the polyester polymer is minimized to maintain high viscosity and high molecular weight, and thus high-strength polyester fiber can be obtained in a subsequent drawing process without applying a high draw ratio, and therefore, the modulus thereof can be effectively lowered by the low drawing process, thereby obtaining a polyester fiber satisfying the above-mentioned physical properties.

Further, in the melt-spinning process, the spinning rate of the polyester polymer can be adjusted, for example, in the range of 300 to 1,000 m/min, and preferably 350 to 700 m/min in order to perform the melt-spinning process under low spinning tension, that is, in order to minimize spinning tension, in terms of minimizing the decomposition of the polyester polymer. As such, the process of melt-spinning the polyester polymer is selectively performed under a low spinning tension and a low spinning rate, so that the decomposition of the polyester polymer can be further minimized.

Meanwhile, the undrawn fiber obtained by such a melt-spinning process may have an intrinsic viscosity of 0.8 dl/g or more, or 0.8 to 1.2 dl/g, preferably 0.85 dl/g or more, and more preferably 0.90 dl/g or more. Further, the CEG content in the molecule of the undrawn fiber obtained by the low-temperature spinning may be 50 meq/kg or less, preferably 40 meq/kg or less, and more preferably 30 meq/kg or less. The CEG content in the molecule of the undrawn fiber can be maintained at the same level as that in the molecule of a drawn fiber obtained by performing a subsequent drawing process, that is, that in the molecule of a polyester fiber.

Particularly, as described above, when the thermal decomposition of the polyester polymer having high viscosity and low CEG content is suppressed by melt-spinning the polyester polymer under the condition of low temperature, the difference in intrinsic viscosity between the polyester polymer and the polyester fiber and the difference in CEG content

therebetween can be minimized. For example, melt-spinning and subsequent processes may be performed such that the difference in intrinsic viscosity between the polyester polymer and the polyester fiber is 0.5 dl/g or less, or 0 to 0.5 dl/g, and preferably 0.4 dl/g or less, and in a practical process, the intrinsic viscosity difference may be 0.1 dl/g or more. Further, the melt-spinning and subsequent processes may be performed such that the difference in the CEG content in the molecule between the polyester polymer and the polyester fiber is 20 meq/kg or less, or 0 to 20 meq/kg, and preferably 15 meq/kg or less, and in a practical process, the CEG content difference may be 3 meq/kg or more.

As such, in the present invention, when the decrease in intrinsic viscosity of the polyester polymer and the increase in CEG content thereof are suppressed to the highest degree, excellent mechanical properties of the polyester fiber can be maintained, and simultaneously high elongation thereof can be secured, thereby producing a high-strength and low-modulus polyester fiber suitable for a fabric for an airbag.

It is preferred that the polyester polymer, for example, PET chip is spun by a spinning nozzle designed such that the monofilament fineness is 0.5 to 20 denier, and preferably 1 to 15 denier. That is, it is preferred that the monofilament fineness must be 1.5 denier or more in order to reduce the possibility of a monofilament being cut during spinning and the possibility of a monofilament being cut by interference during cooling, and that the monofilament fineness must be 15 denier or less in order to increase cooling efficiency.

Further, after the polyester polymer is melt-spun, a cooling process is performed to prepare undrawn polyester fiber. The cooling process may be preferably performed by applying cooling air at 15 to 60 °C, and the flow rate of the cooling air may be preferably adjusted to 0.4 to 1.5 m/s at each cooling air temperature. By this means, undrawn polyester fiber having physical properties according to an embodiment of the present invention can be more easily prepared.

Meanwhile, after undrawn polyester fiber is prepared by the spinning step, the prepared undrawn fiber is drawn to produce drawn fiber. In this case, the drawing process may be performed under a condition of a draw ratio of 5.0 to 6.5, preferably 5.0 to 6.2 or 6.0, and more preferably 5.0 to 5.8. Particularly, in the drawing process, after undrawn polyester fiber passes through GR 1 and GR 2, first stage drawing may be progressed at a draw ratio of 3.0 to 5.0, preferably 3.2 to 4.8 between GR 2 and GR 3, and drawing may be progressed at a draw ratio of 1.0 to 2.0, preferably 1.2 to 1.8 between GR 3 and GR 4.

The undrawn polyester fiber is present in a state in which the high intrinsic viscosity and low initial modulus thereof are maintained and the CEG content in the molecule thereof is minimized by optimization of melt-spinning process. Therefore, when the drawing process is performed at a high draw ratio of more than 6.5, the undrawn polyester fiber is excessively drawn, so that the produced drawn fiber may be cut or mowed and may have low elongation and high modulus because of high fiber orientation. Particularly, in the case where the elongation of the fiber decreases and the modulus thereof increases at such a high draw ratio, the folding and packing properties may become poor when this polyester fiber is applied to a fabric for an airbag. Conversely, when the drawing process is performed at a relatively low draw ratio, the strength of the produced polyester fiber may partially decrease due to low fiber orientation. However, in terms of physical properties, when the drawing process is performed at a draw ratio of 5.0 or more, it is possible to produce a high-strength and low-modulus polyester fiber suitable for being applied to a fabric for an airbag. Therefore, it is preferred that the drawing process is performed at a draw ratio of 5.0 to 6.5.

According to another proper embodiment of the present invention, the process of preparing the polyester fiber may include the drawing, thermally fixing, relaxing, and winding processes through multi-step godet rollers from the melt-spinning process of the high viscosity polyester polymer chip to the winding process by the winder, in order to produce the polyester fiber satisfying high strength and low contraction and having low modulus by direct spinning and drawing processes.

The drawing process may be performed after passing the undrawn polyester fiber through a godet roller with an oil pickup amount of 0.2% to 2.0%.

In the relaxation process, the relaxation rate may be preferably 1% to 10%. If the relaxation rate is less than 1%, contraction rate may not be achieved, and it may be difficult to prepare high elongation low modulus fiber due to the formation of fiber with high orientation degree like under high draw ratio condition, and if it is more than 10%, fiber vibration may become serious on a godet roller, and thus, workability may not be secured.

Meanwhile, in the drawing process, a heat fixation process of heat-treating the undrawn fiber at a temperature of 130 to 250 °C, for example, 130 to 220 °C or 170 to 250 °C may be additionally performed. Preferably, for the proper drawing process, the undrawn polyester fiber may be heat-treated at a temperature of 140 to 245 °C, for example, 140 to 215 °C or 175 to 245 °C. When the temperature is lower than 130 °C, thermal effects are insufficient, and the relaxation efficiency becomes low, and thus it is difficult to realize an appropriate contraction rate. When the temperature is higher than 250 °C, the strength of the fiber is deteriorated by the thermal decomposition and tar is formed on a roller, thus deteriorating workability.

In this case, the winding speed may be 2,000 to 4,000 m/min, and preferably 2,500 to 3,700 m/min.

Meanwhile, according to another embodiment, polyester fiber prepared by the above explained process is provided. The polyester fiber, as explained above, may be prepared by melt spinning polyester polymer, for example, a PEET chip to prepare undrawn fiber, and drawing the undrawn fiber, and specific conditions or progressing methods

of each step may be directly or indirectly reflected on the properties of the fiber, to prepare polyester fiber having specific properties.

Particularly, the polyester fiber prepared through the process optimization has high contraction as well as low modulus and high strength. Thus, if fabric for an airbag is prepared using the polyester fiber, slippage and tearing of the fabric due to internal pressure may be prevented when the airbag is unfolded, air permeability may be significantly improved, and simultaneously, impact applied to a passenger may be minimized.

It was found out that the polyester fiber prepared according to the present invention may have initial modulus of 40 to 100 g/d, elongate 0.5% or more at the stress of 1.0 g/d, elongate 4.3% or more at the stress of 4.0 g/d, and elongate 7.5% or more at the stress of 7.0 g/d at room temperature. It was also found out that through the optimization of melt spinning and drawing processes, the content of CEG (carboxyl end group) which exists as an acid under high moisture condition to induce scission of a basic molecular chain of fiber may be minimized. Thus, since the polyester fiber simultaneously exhibits low initial modulus and high elongation, it may be preferably applied for fabric for an airbag having excellent mechanical properties, packing property, shape stability, impact resistance, and gas barrier effect.

The polyester generally has higher stiffness than nylons due to its molecular structure and shows a characteristic of high modulus. Therefore, when the polyester is used in the fabric for an airbag, it is difficult to install the airbag in a narrow space of a vehicle because the folding and packing properties remarkably deteriorate. However, the polyester fiber obtained through the controlled melt-spinning and drawing process shows the characteristics of high strength and low modulus, and shows a lower initial modulus of 40 to 100 g/d, preferably 50 to 100 g/d, more preferably 55 to 95 g/d, which is lower than that of the previously known industrial polyester fiber.

In this regard, the modulus of the polyester fiber means a coefficient value of elasticity that is obtained from the slope in the linear elastic region of the stress-strain curve obtained by a tensile test and corresponds to an elasticity value indicating a degree of elongation and a degree of deformation when the fiber is stretched by its both side ends. Furthermore, the initial modulus of the fiber means a coefficient value of elasticity at an approximate starting point of the elastic range after "0" point in the stress-strain curve. When the initial modulus of the fiber is high, the elasticity is good but the stiffness of the fabric may become poor. When the initial modulus is too low, the stiffness of the fabric is good but the elastic recovery becomes low and the toughness of the fabric may become poor. The initial modulus of the polyester fiber of the present invention is optimized in a much lower range than that of the prior polyester fibers for the industrial applications. As such, since the fabric for an airbag is produced from the polyester fiber having a lower initial modulus than those of the prior fibers, the fabric can resolve the problem of the high stiffness of the prior polyester fabric, and then can exhibit superior folding, flexibility, and packing properties.

In addition to the low initial modulus, the polyester fiber is characterized in that it is minimally drawn. The elongation of the polyester fiber may be 0.5% or more, or 0.5% to 1.5%, and preferably 0.7% to 1.2% at a stress of 1.0 g/ d; 4.3% or more, or 4.3% to 20%, and preferably 4.3% to 15% at a stress of 4.0 g/ d; and 7.5% or more, or 7.5% to 25%, and preferably 7.5% to 20% at a stress of 7.0 g/d, at room temperature. Owing to these characteristics, the fabric for an airbag produced from the polyester fiber can solve high stiffness problem of the prior polyester fabric, and have superior foldability, flexibility and packing property.

The polyester fiber may preferably include polyethyleneterephthalate(PET) as a main ingredient. In the preparation of the PET, various additives may be added, and the fiber may include 70 mol% or more, more preferably 90 mol% or more of PET so as to achieve properties suitable for fabric for an airbag. Hereinafter, the term PET refers to a polymer including 70 mol% or more of PET polymer, unless otherwise stated.

Simultaneously, the polyester fiber may have improved intrinsic viscosity compared to that of the previously known polyester fiber. That is, the polyester fiber may have an intrinsic viscosity of 0.8 dl/g or more, or 0.8 to 1.2 dl/g, preferably 0.85 to 1.15 dl/g, and more preferably 0.90 dl/g to 1.10 dl/g. Preferably, the intrinsic viscosity of the polyester fiber may be maintained within the range such that the polyester fiber is not thermally deformed during a coating process for forming the polyester fiber into an airbag.

Only when the intrinsic viscosity of the fiber is 0.8 dl/g or more, the elongation of the polyester fiber becomes low, thus satisfying the required high strength of a fabric for an airbag, and otherwise, the elongation thereof becomes high, thus not exhibiting the physical properties. As such, when the elongation of the polyester fiber is high, the degree of orientation thereof increases such that the fiber may have a high modulus. Therefore, it is preferred that the intrinsic viscosity of the fiber is maintained at 0.8 dl/g or more such that the elongation thereof become low, thus realizing a fabric having a low modulus. Further, when the viscosity of the fiber is more than 1.2 dl/g, the tension increases during elongation, thereby causing process problems, and thus it is more preferred that the viscosity thereof is 1.2 dl/g or less. Particularly, when the intrinsic viscosity of the polyester fiber of the present invention is maintained high, the elongation thereof becomes low, thus allowing a fabric for an airbag to have high strength characteristics such as sufficient mechanical properties, impact resistance and toughness as well as to have low stiffness.

Therefore, it is possible to produce a fabric for an airbag exhibiting excellent mechanical properties, packing property, shape stability, impact resistance and gas barrier effect at the same time by using the polyester fiber having the low initial modulus and high elongation, and preferably, exhibiting high intrinsic viscosity. Accordingly, when this

polyester fiber is used, fabric for an airbag having excellent impact resistance, shape stability, mechanical properties, air-tightness as well as lower stiffness, folding property, flexibility, packing property can be obtained. Such polyester fabric for an airbag exhibits excellent mechanical properties, shape stability and gas barrier effect, provides excellent folding property and packing property to an airbag at the same time when the airbag is mounted in the narrow space of an automobile, and allows an airbag to have high flexibility to minimize the impact applied to a passenger, thus safely protecting the passenger. Therefore, the polyester fabric can be preferably applied to the fabric for an airbag, or the like.

And, since the polyester fiber is prepared under the above explained melt spinning and drawing conditions, it may exhibit significantly decreased carboxyl eng group (CEG) content compared to the previously known polyester fiber. Specifically, the polyester fiber may exhibit CEG content of 50 meq/kg or less, preferably 40 meq/kg or less, more preferably 30 meq/kg or less. The carboxyl end group (CEG) in a polyester molecular chain may attack an ester bond under high temperature high moisture conditions to cause molecular chain scission, and thus, properties may be lowered after aging. Particularly, if the CEG content is more than 50 meq/kg, an ester bond may be cut by CEG under high moisture condition when the fiber is applied for an airbag, and lowering of properties may be caused, and thus, it is preferable that the CEG content is 50 meq/kg or less.

Meanwhile, the polyester fiber according to one embodiment of the present invention may have a tensile tenacity of 7.5 g/d or more, or 7.5 g/d to 11.0 g/d, preferably 8.0 g/ d or more, or 8.0 g/ d to 10.0 g/d, and a breaking elongation of 13% or more, or 13% to 35 %, preferably 14% or more, or 14% to 25%. The fiber may have a dry contraction rate of 3.5% or more, or 3.5% to 12.0%, preferably 4.0% or more, and more preferably 4.5% or more. As explained above, by optimizing intrinsic viscosity, initial modulus and elongation ranges, the polyester fiber may exhibit excellent strength and properties, and manifest excellent performance when prepared into fabric for an airbag. Particularly, by optimizing and maintaining dry contraction rate of the polyester fiber at high level, shape stability, air permeability, edge comb resistance, and the like of the fabric may be simultaneously effectively controlled through high contraction.

Preferably, the polyester fiber of the present invention may have a contraction stress of 0.005 to 0.075 g/d at 150 °C corresponding to a laminate coating temperature of common coating fabric, and may have a contraction stress of 0.005 to 0.075 g/d at 200 °C corresponding to a sol coating temperature of common coating fabric. That is, when each of the contraction stresses at 150 °C and 200 °C is 0.005 g/d or more, it is possible to prevent fabric from becoming slack by heat during a coating process, and when each of the contraction stresses at 150 °C and 200 °C is 0.075 g/d or less, the relaxation stress of a fabric can be decreased when the fabric is cooled at room temperature after the coating process. The contraction stress is based on the value measured under a fixed load of 0.10 g/d.

As such, in order to prevent the deformation during a heat treatment process such as a coating process or the like, the polyester fiber may have a crystallinity of 35 % to 60%, preferably 36 % to 50 % or 40 % to 53%, and more preferably 37% to 48% or 41 % to 50%. When the fiber is applied to the fabric for an airbag, the crystallinity of the fiber must be 35% or more in order to maintain the thermal shape stability of the fabric. When the crystallinity thereof is more than 60%, there is a problem in that the impact absorbing performance of the fabric is deteriorated because its noncrystalline region is decreased. Therefore, it is preferred that the crystallinity of the polyester fiber is 60% or less.

Further, the monofilament fineness of the polyester fiber may be 0.5 to 20 denier, and preferably 2.0 to 10.5 denier. The polyester fiber must maintain low fineness and high strength in terms of packing property so that the polyester fiber is effectively used in the fabric for an airbag. Accordingly, the total fineness of the fiber may be 200 to 1,000 denier, preferably 220 to 840 denier, and more preferably 250 to 600 denier. Furthermore, it is preferable that the number of filaments of the fiber may be 50 to 240, preferably 55 to 220, and more preferably 60 to 200, because a greater number of filaments of the fiber can give a softer touch but too many filaments are not good in terms of spinnability.

Still another embodiment of the present invention provides polyester fabric for an airbag comprising the above-mentioned polyester fiber.

In the present invention, the term "fabric for an airbag" refers to "fabric or nonwoven fabric" used to manufacture an airbag for vehicles, and is characterized in that it is manufactured using the polyester fiber produced by the above process.

Particularly, in the present invention, by using high contraction polyester fiber having high strength-high elongation and low modulus instead of the existing polyester having high strength-low elongation and high modulus, polyester fabric for an airbag, which has high energy absorbing ability when the airbag is inflated, excellent shape stability, air blocking effects, folding property, flexibility and packing property, can be manufactured. Further, the fabric for an airbag has excellent physical properties at room temperature, and can maintain excellent mechanical properties and air-tightness under severe conditions of high temperature and high humidity even after it is aged.

More particularly, the tensile strength of the fabric for an airbag of the present invention that is measured at room temperature according to the ASTM D 5034 method (standard of the American Society for Testing and Materials) may be 220 kgf/inch or more, or 220 to 350 kgf/inch, and preferably 230 kgf/inch or more. It is preferable that the tensile strength is 220 kgf/inch or more in terms of the properties required for existing airbags. It is also preferable that the tensile strength is 350 kgf/inch or less in terms of practical property exhibition.

The breaking elongation of the fabric for an airbag that is measured according to the ASTM D 5034 method

(standard of the American Society for Testing and Materials) at room temperature may be 20 % or more, or 20 % to 60%, and preferably 30 % or more. It is preferable that the breaking elongation is 20% or more in terms of the properties required for existing airbags. It is also preferable that the breaking elongation is 60% or less in terms of practical property exhibition.

Furthermore, because the coated fabric for an airbag is inflated rapidly by high temperature high pressure gas, superior tear strength is required. Therefore, the tear strength that represents the burst strength of the coated fabric for an airbag may be 20 kgf or more, or 20 to 60 kgf, and preferably 23 kgf or more, or 25 kgf or more when it is measured according to the ASTM D 2261 method (standard of the American Society for Testing and Materials) at room temperature. If the tear strength of the coated fabric is below the lowest limit, that is, below 20 kgf, at room temperature, the airbag may burst when unfolded and it may cause a huge danger in function of the airbag.

The edgecomb resistance of the fabric for an airbag that is measured at room temperature(25 °C) according to the ASTM D 5034 method (standard of the American Society for Testing and Materials) may be 360 N or more or 360 to 1,000 N, preferably 380 N or more, more preferably 400 N or more, still more preferably 420 N or more. And, the edge comb resistance of the polyester fabric that is measured at 90 °C may be 300 N or more or 300 to 970 N, preferably 310 N or more, more preferably 320 N or more. If the edgecomb resistance of the polyester fabric measured at room temperature(25 °C) and 90 °C is respectively less than 360 N and less than 300 N, fabric strength at the seam part of the airbag cushion may be rapidly lowered when the airbag is unfolded, and thus, the fabric may be torn due to generation of pin hole and seam slippage when the airbag is practically unfolded.

The warp-wise and weft-wise shrinkage rates of the fabric for an airbag according to the present invention that are measured according to ASTM D 1776 method may be 4.0% or less, and preferably 2.0% or less, respectively. It is most preferable that the warp-wise and weft-wise shrinkage rates do not exceed 1.0%, in terms of securing the superior shape stability of the fabric.

The air permeability of the fabric that is measured according to ASTM D 737 method (standard of the American Society for Testing and Materials) at room temperature may be 10.0 cfm or less, or 0 to 10.0 cfm. Particularly, the air permeability of the fabric for an airbag can be apparently lowered by forming a coating layer of a rubber material on the fabric, which is possible to lower the air permeability to near 0 cfm. However, unless the rubber-material is coated thereon, the air permeability of the non-coated fabric of the present invention that is measured according to the ASTM D 737 method (standard of the American Society for Testing and Materials) at room temperature may be 10.0 cfm or less, or 0 to 10.0 cfm, preferably 3.5 cfm or less, or 0.1 to 3.5 cfm, and more preferably 1.5 cfm or less, or 1.0 cfm or less. If the air permeability is over 10.0 cfm, or over 3.5 cfm, it may be undesirable in terms of maintaining the air-tightness of the fabric for an airbag.

Furthermore, the stiffness of the fabric for an airbag of the present invention that is measured according to the ASTM D 4032 method (standard of the American Society for Testing and Materials) at room temperature may be 1.2 kgf or less, or 0.2 to 1.2 kgf, and preferably 1.0 kgf or less. Particularly, the stiffness may be 1.2 kgf or less when the fiber is 530 denier or more, and the stiffness may be 1.0 kgf or less or 0.8 kgf or less when the fiber is less than 460 denier.

It is preferable that the fabric of the present invention maintains its stiffness in the above range, in order to be effectively used for an airbag. If the stiffness is too low such as below 0.2 kgf, it may not function as a sufficient protecting support when the airbag is inflated, and packing property may also be deteriorated when it is installed in a vehicle because its shape stability deteriorates. Furthermore, in order to prevent the fabric from becoming too rigid to fold, to prevent the packing property from being deteriorated, and to prevent the fabric from being discolored, the stiffness may preferably be 1.2 kgf or less. Particularly, the stiffness may be preferably 1.0 kgf or less in the case of being 460 denier or less, and 1.2 kgf or less in the case of being 530 denier or more.

Still another embodiment of the present invention provides a process of producing fabric for an airbag by using the polyester fiber. The method of producing the fabric for an airbag of the present invention includes the steps of weaving raw fabric for an airbag using the polyester fiber, scouring the woven raw fabric for an airbag, and tentering the scoured fabric.

In the present invention, the polyester fiber may be formed into the final fabric for an airbag by the typical weaving, scouring and tentering processes. In this case, the weaving shape of the polyester fabric is not particularly limited. Preferably, the polyester fabric may be a plain-woven type fabric or a one-piece-woven (OPW) type fabric.

Particularly, the fabric for an airbag of the present invention may be manufactured by performing beaming, weaving, scouring and tentering processes using the polyester fiber as a warp and a weft. The fabric may be manufactured using a general weaving machine, and the kind of the weaving machine is not limited. Preferably, the plain-woven type fabric may be manufactured using a Rapier loom, an air jet loom or a water jet loom, and the OPW type fabric may be manufactured using a Jacquard loom.

The prepared fabric for an airbag is manufactured into an airbag cushion of a specific shape through cutting and sewing processes. The shape of the airbag is not specifically limited and it may be manufactured in a common shape.

Meanwhile, still another embodiment of the present invention provides an airbag system including the airbag.

The airbag system may be equipped with a general apparatus that is well known to those skilled in the art. The

airbags may be largely classified into frontal airbags and side curtain airbags. The frontal airbags includes an airbag for a driver seat, an airbag for a passenger seat, an airbag for side protection, an airbag for knee protection, an airbag for ankle protection, an airbag for pedestrian protection, and the like. The side curtain airbags are used to protect an occupant at the time of side collision and overturn of a vehicle. Therefore, the airbag of the present invention may be a frontal airbag or a side curtain airbag.

In the present invention, matters other than the above-mentioned contents are not particularly limited because they can be added or omitted according to circumstances.

## EFFECTS OF THE INVENTION

According to the present invention, a process for producing polyester fiber suitable for fabric for an airbag having excellent mechanical properties, flexibility and foldability, and the like is provided, by reacting a specific dicarboxylic acid composition and glycol in the optimum compositional ratio.

Since the prepared fiber simultaneously exhibits high strength, low modulus and high contraction, excellent shape stability, mechanical properties, and gas barrier effect may be achieved, and simultaneously excellent foldability and flexibility may be secured when the fiber is used in fabric for an airbag, and thus, packing property may be significantly improved when the airbag is installed in an automobile, and impact applied to passengers may be minimized to safely protect passengers. Particularly, if the polyester fiber according to the present invention is used, slippage and tearing of the fabric due to internal pressure may be prevented when the airbag is unfolded, and simultaneously, air permeability may be significantly improved, thus protecting passengers from the impact when automobiles collide.

Accordingly, the polyester fiber prepared according to the present invention and polyester fabric using the same may be preferably used in the manufacture of an airbag for an automobile, and the like.

## BRIEF DESCRIPTION OF THE DRAWINGS

FIG. 1 shows a common airbag system.

FIG. 2 is a flow chart schematically showing the producing process of polyester fiber according to one embodiment of the invention.

## BEST MODE FOR THE INVENTION

Hereinafter, the preferred Examples are provided for better understanding of the present invention. However, the following Examples are for illustrative purposes only, and the present invention is not intended to be limited by the following Examples.

### Examples 1 to 5

Under the conditions as described in the following Table 1, an esterification reaction was conducted at 285 to 292 °C for 4 hours at the mole ratio (AA/TPA) of adipic acid (AA) and terephthalic acid (TPA) of 0.02 to 0.12, and the mole ratio [EG/(TPA+AA)] of ethyleneglycol (EG) and the dicarboxylic acid components of 1.3. After the esterification reaction, the produced oligomer was polycondensed at 284 to 290 °C for 3 hours 30minutes to produce polymer.

The polyester polymer(chip) produced by the polycondensation was cut in the water using an underwater cutter and prepared in a spherical pellet form such as a bead.

Since the produced polyester polymer(chip) is prepared in a spherical form, sticking does not occur when solid state polymerization is conducted, and thus, solid state polymerization temperature may be increased compared to the existing solid state polymerization of copolymer, and herein, solid state polymerization was additionally conducted at 235 °C for 22 to 24 hours to prepare solid state polymerized polyester chip with intrinsic viscosity(IV) of 1.3 dl/g.

The solid state polymerized polyester chip was manufactured into polyester fiber for an airbag through melt spinning and drawing as shown in FIG. 2.

Particularly, the solid state polymerized polyester chip was melt spun at a temperature of 290 to 294 °C, the molten polyester was discharged through a spinneret, and the discharged molten polyester was passed through a delayed cooling section consisting of a hood-heater and an insulation board to delayed-quench.

To the delayed-quenched polyester fiber, emulsion was added using an oil supplying device. Wherein, the amount of the emulsion was 0.8 parts by weight based on 100 parts by weight of the fiber, and as the emulsion, spinning oil comprising ethyleneoxide/propyleneoxide adduct diol ester (30 parts by weight), ethyleneoxide adduct diol ester (15 parts by weight), glyceryl trimester (10 parts by weight), trimethylpropane trimester (10 parts by weight), and a small

amount of an antistatic agent was used.

The emulsion-added fiber was passed through a pre-interlacer, and drawn using a godet roller.

After the drawing, the drawn polyester fiber was intermingled using a 2nd interlacer, and winded using a winder to prepare polyester fiber.

Wherein, process conditions including the mole ratio of each component, the conditions of esterification reaction, polycondensation reaction and solid state polymerization, intrinsic viscosity of PET polymer, melt spinning, draw ratio, heat treatment, and the like are as shown in the following Table 1, and the other conditions followed common conditions for producing polyester fiber.

**[Table 1]**

| | Example 1 | Example 2 | Example 3 | Example 4 | Example 5 |
|---|---|---|---|---|---|
| AA/TPA mole ratio | 0.12 | 0.9 | 0.07 | 0.04 | 0.02 |
| EG/ (TPA+AA) mole ratio | 1.3 | 1.3 | 1.3 | 1.3 | 1.3 |
| Esterification reaction temperature(°C) | 285 | 285 | 290 | 290 | 292 |
| Esterifiaction reaction time (hr) | 4 | 4 | 4 | 4 | 4 |
| Polycondensation reaction temperature(°C) | 284 | 284 | 288 | 290 | 290 |
| Polycondensation reaction time (hr) | 3.5 | 3.5 | 3.5 | 3.5 | 3.5 |
| Raw Chip IV (dl/g) | 0.64 | 0.65 | 0.66 | 0.67 | 0.67 |
| Solid state polymerization reaction temperature(°C) | 235 | 235 | 235 | 235 | 235 |
| Solid state polymerization reaction time(hr) | 24 | 24 | 22 | 23 | 24 |
| IV(dl/g) after solid state polymerization | 1.3 | 1.3 | 1.3 | 1.3 | 1.3 |
| Size of chip(g/100ea) | 2.0 | 2.0 | 2.0 | 2.0 | 2.0 |
| Spinning temperature(°C) | 290 | 290 | 292 | 292 | 294 |
| Winding speed(m/min) | 3,000 | 3,000 | 3,000 | 3,000 | 3,000 |
| Total draw ratio | 5.91 | 5.82 | 5.80 | 5.75 | 5.72 |
| Heat treatment temperature(°C) | 220 | 222 | 222 | 224 | 227 |
| Relaxation rate(%) | 3.4 | 3.8 | 4.3 | 4.5 | 5.0 |

Examples 6 to 10

Under the conditions as described in the following Table 2, an esterification reaction was conducted at 282 to 288 °C for 4 hours at the mole ratio (iso-PA/TPA) of isophthalic acid and terephthalic acid (TPA) of 0.02 to 0.08, and the mole ratio [EG/(TPA++iso-PA)] of ethyleneglycol (EG) and the dicarboxylic acid components of 1.3. After the esterification reaction, the produced oligomer was polycondensed at 288 to 292 °C for 3.5 hours to produce polymer.

And, the polyester polymer(chip) produced by the polycondensation was additionally subjected to solid state polymerization at 217 to 220 °C for 24 to 28 hours to prepare solid state polymerized polyester chip with intrinsic viscosity (IV) of 1.2 dl/g.

The solid state polymerized polyester chip was manufactured into polyester fiber for an airbag through melt spinning and drawing as shown in FIG. 2.

Particularly, the solid state polymerized polyester chip was melt spun at a temperature of 288 °C, the molten polyester was discharged through a spinneret, and the discharged molten polyester was passed through a delayed cooling section consisting of a hood-heater and an insulation board to delayed-quench.

To the delayed-quenched polyester fiber, emulsion was added using an oil supplying device. Wherein, the amount of the emulsion was 0.8 parts by weight based on 100 parts by weight of the fiber, and as the emulsion, spinning oil comprising ethyleneoxide/propyleneoxide adduct diol ester (30 parts by weight), ethyleneoxide adduct diol ester (15 parts by weight), glyceryl trimester (10 parts by weight), trimethylpropane trimester (10 parts by weight), and a small amount of an antistatic agent was used.

The emulsion-added fiber was passed through a pre-interlacer, and drawn using a godet roller.

After the drawing, the drawn polyester fiber was intermingled using a 2nd interlacer, and winded using a winder to prepare polyester fiber.

Wherein, process conditions including the mole ratio of each component, the conditions of esterification reaction, polycondensation reaction and solid state polymerization, intrinsic viscosity of PET polymer, melt spinning, draw ratio, heat treatment, and the like are as shown in the following Table 2, and the other conditions followed common conditions for producing polyester fiber.

**[Table 2]**

| | Example 6 | Example 7 | Example 8 | Example 9 | Example 10 |
|---|---|---|---|---|---|
| iso-PA/TPA mole ratio | 0.08 | 0.06 | 0.04 | 0.03 | 0.02 |
| EG/(TPA+iso-PA) mole ratio | 1.3 | 1.3 | 1.3 | 1.3 | 1.3 |
| Esterifiaction reaction temperature(°C) | 282 | 286 | 286 | 288 | 288 |
| Esterifiaction reaction time(hr) | 4 | 4 | 4 | 4 | 4 |
| Polycondensation reaction temperature(°C) | 288 | 288 | 290 | 290 | 292 |
| Polycondensation reaction time(hr) | 3.5 | 3.5 | 3.5 | 3.5 | 3.5 |
| Raw Chip IV(dl/g) | 0.66 | 0.65 | 0.66 | 0.65 | 0.67 |
| Solid state polymerization reaction temperature(°C) | 217 | 217 | 219 | 220 | 220 |
| Solid polymerization reaction time(hr) | 28 | 26 | 24 | 25 | 24 |
| IV(dl/g) after solid state polymerization | 1.2 | 1.2 | 1.2 | 1.2 | 1.2 |
| Size of chip(g/100ea) | 2.0 | 2.0 | 2.0 | 2.0 | 2.0 |
| Spinning temperature(°C) | 288 | 288 | 288 | 288 | 288 |
| Winding speed(m/min) | 3,000 | 3,000 | 3,000 | 3,000 | 3,000 |
| Total draw ratio | 5.90 | 5.80 | 5.70 | 5.65 | 5.60 |
| Heat treatment temperature(°C) | 200 | 205 | 208 | 210 | 215 |
| Relaxation rate(%) | 3.1 | 4.5 | 4.8 | 5.1 | 5.2 |

The properties of the polyester fiber prepared according to Examples 1 to 10 were measured as follows, and the measured properties are summarized in the following Tables 3 and 4.

1) Crystallinity

The density (p) of the polyester fiber was measured at 25 °C by a density gradient tube method using n-haptane and carbon tetrachloride, and the crystallinity was calculated by the following Calculation Formula 1 below:

[Calculation Formula 1]

$$X_c(crystallinity) = \frac{\rho_c(\rho - \rho_a)}{\rho(\rho_c - \rho_a)}$$

wherein $\rho$ is density of fiber, $\rho_c$ is density of crystal (in the case of PET, 1.457 g/cm$^3$), and $\rho_a$ is density of noncrystal (in the case of PET,1.336 g/cm$^3$).

2) Intrinsic viscosity

An emulsion was extracted from a sample using carbon tetrachloride, the sample was melted by OCP (ortho-chloro phenol) at 160±2°C, and then the viscosity of the sample in a viscosity tube was measured at 25 °C using an automatic viscometer (Skyvis-4000). The intrinsic viscosity (IV) of the polyester fiber was calculated by Calculation Formula 2 below:

[Calculation Formula 2]

$$\text{Intrinsic viscosity (IV)} = \{(0.0242 \times \text{Rel}) + 0.2634\} \times F$$

wherein

$$\text{Rel} = (\text{seconds of solution} \times \text{specific gravity of solution} \times \text{viscosity coefficient}) / (\text{OCP viscosity})$$

and

$$F = (\text{IV of the standard chip}) / (\text{average of three IV measured from the standard chip with standard action})$$

3) CEG content

The CEG (carboxyl end group) content of the polyester fiber was measured according to ASTM D 664 and D 4094, in which 0.2 g of a sample was put into a 50 mL triangle flask, 20 mL of benzyl alcohol was added to the sample, the temperature was increased to 180 °C using a hot plate and then left for 5 minutes at the same temperature to completely dissolve the sample. Then, the solution was cooled to 160 °C, 5 to 6 drops of phenolphthalein were applied to the solution when the temperature reached 135 °C, and then the solution was titrated with 0.02 N KOH to change the colorless solution into the pink solution. At this titration point, the CEG content (-COOH, million equiv./sample kg) was calculated by Calculation Formula 3 below:

[Calculation Formula 3]

$$\text{CEG} = (A-B) \times 20 \times 1/W$$

wherein A is the amount (mL) of KOH consumed in the titration of a sample, B is the amount (mL) of KOH consumed in a blank sample, and W is the weight (g) of a sample.

4) Initial modulus

According to the ASTM D 885 method (standard of the American Society for Testing and Materials), the initial modulus was measured by calculating a coefficient value of elasticity from the slope in the linear elastic region of the stress-strain curve obtained by a tensile test.

5) Tensile tenacity and breaking elongation

The tensile tenacity and breaking elongation of the polyester fiber were measured using a universal material testing machine (Instron) under conditions of a gauge length of 250 mm, a tension rate of 300 mm/min and an initial load of 0.05 g/d.

6) Dry contraction rate

The dry contraction rate was measured at a temperature of 180 °C and primary load(0.05 g/d) for 2 minutes using a Testrite MK-V (manufactured by Testrite Corporation, England).

7) Monofilament fineness

The monofilament fineness was measured according to the method of picking the fiber of 9,000 m by using a reel, weighing the fiber to obtain the total fineness (denier) of the fiber, and dividing the total fineness by the number of filaments.

8) Elongation

Measurement was performed in the same manner as in the measurement of tensile tenacity and the breaking elongation, and the elongation value corresponding to each load was identified in the S-S Curve.

**[Table 3]**

| | | Example 1 | Example 2 | Example 3 | Example 4 | Example 5 |
|---|---|---|---|---|---|---|
| Crystallinity (%) | | 41.8 | 42.5 | 43.1 | 43.5 | 44.5 |
| Intrinsic viscosity of fiber(dl/g) | | 0.98 | 0.99 | 0.99 | 0.98 | 0.98 |
| CEG of fiber(meq/kg) | | 22 | 23 | 23 | 24 | 24 |
| Initial modulus (g/d) | | 73 | 76 | 80 | 82 | 84 |
| Tensile tenacity (g/d) | | 9.1 | 8.9 | 8.9 | 9.1 | 9.2 |
| Breaking elongation (%) | | 23.2 | 22.5 | 21.5 | 20.9 | 20.7 |
| Dry contraction rate (%) | | 9.9 | 9.5 | 8.6 | 7.5 | 6.7 |
| Monofilament fineness (de) | | 9.8 | 8.8 | 7.6 | 6.8 | 5.8 |
| Total fineness (de) | | 7.7 | 7.7 | 8.3 | 4.2 | 4.7 |
| Number of filament | | 460 | 460 | 500 | 500 | 460 |
| Elongation (%) | At the stress of 1.0 g/d | 0.89 | 0.87 | 0.83 | 0.81 | 0.80 |
| | At the stress of 4.0g/d | 9.9 | 9.7 | 9.6 | 9.4 | 9.2 |
| | At the stress of 7.0g/d | 15.8 | 15.6 | 15.3 | 14.7 | 14.5 |

**[Table 4]**

| | | Example 6 | Example 7 | Example 8 | Example 9 | Example 10 |
|---|---|---|---|---|---|---|
| Crystallinity (%) | | 42.5 | 43.2 | 44.4 | 44.7 | 44.9 |
| Intrinsic viscosity of fiber(dl/g) | | 0.98 | 0.99 | 0.98 | 0.98 | 0.98 |
| CEG fiber(meq/kg) | | 28 | 26 | 26 | 23 | 24 |
| Initial modulus (g/d) | | 68 | 72 | 75 | 81 | 84 |
| Tensile tenacity (g/d) | | 8.5 | 8.7 | 8.9 | 9.0 | 9.2 |
| Breaking elongation (%) | | 23.2 | 22.8 | 21.8 | 21.4 | 21.4 |
| Dry contraction rate (%) | | 9.8 | 8.5 | 7.9 | 7.3 | 6.8 |
| Monofilament fineness (de) | | 7.7 | 7.7 | 8.3 | 4.2 | 4.7 |
| Total fineness (de) | | 460 | 460 | 500 | 500 | 460 |
| Number of filament | | 60 | 60 | 60 | 120 | 120 |
| Elongation (%) | At the stress of 1.0 g/d | 0.90 | 0.89 | 0.86 | 0.85 | 0.84 |
| | At the stress of 4.0 g/d | 9.9 | 9.7 | 9.5 | 9.3 | 9.2 |
| | At the stress of 7.0 g/d | 15.8 | 15.7 | 15.5 | 15.2 | 14.8 |

Comparative Examples 1 to 5

Polyester fiber of Comparative Examples 1 to 5 was prepared by the same method as Example 1, except for applying the conditions described in the following Table 5, and preparing and using cylindrical polymer chip by a strand method instead of underwater cuttering.

Particularly, in Comparative Examples 1 and 2, the esterification reaction was conducted by the same method as Example 1, except for using only terephthalic acid as dicarboxylic acid without adipic acid.

**[Table 5]**

| | Comparative Example 1 | Comparative Example 2 | Comparative Example 3 | Comparative Example 4 | Comparative Example 5 |
|---|---|---|---|---|---|
| AA/TPA mole ratio | - | - | 0.17 | 0.22 | 0.28 |
| EG/(TPA+AA) mole ratio | 1.3 | 1.2 | 1.3 | 1.3 | 1.3 |
| Esterification reaction | 290 | 295 | 285 | 283 | 280 |
| temperature(°C) | | | | | |
| Esterification reaction time (hr) | 4 | 4 | 4 | 4 | 4 |
| Polycondensation reaction temperature(°C) | 295 | 300 | 295 | 295 | 295 |
| Polycondensation reaction time (hr) | 3.5 | 3.5 | 3.5 | 3.5 | 3.5 |
| Raw Chip IV(dl/g) | 0.66 | 0.67 | 0.63 | 0.63 | 0.64 |
| Solid state polymerization temperature (°C) | 240 | 240 | 225 | 220 | 215 |
| Solid state polymerization time (hr) | 26 | 26 | 28 | 32 | 35 |
| IV(dl/g) after solid state polymerization | 1.3 | 1.3 | 1.3 | 1.3 | 1.3 |
| Size of chip(g/100ea) | 3.5 | 3.5 | 3.5 | 3.5 | 3.5 |
| Spinning temperature (°C) | 305 | 305 | 302 | 302 | 302 |
| Winding speed(m/min) | 3,000 | 3,000 | 3,000 | 3,000 | 3,000 |
| Draw ratio | 6.15 | 6.12 | 6.25 | 6.35 | 6.47 |
| Heat treatment temperature (°C) | 240 | 240 | 215 | 210 | 203 |
| Relaxation rate(%) | 3.5 | 4.2 | 3.5 | 2.6 | 2.2 |

The properties of the polyester fiber produced in Comparative Examples 1-5 are summarized in Table 6 below.

**[Table 6]**

| | Comparative Example 1 | Comparative Example 2 | Comparative Example 3 | Comparative Example 4 | Comparative Example 5 |
|---|---|---|---|---|---|
| Crystallinity (%) | 50.5 | 51.2 | 34.3 | 33.5 | 32.4 |
| Intrinsic viscosity of fiber(dl/g) | 0.83 | 0.88 | 0.87 | 0.84 | 0.79 |

(continued)

| | | Comparative Example 1 | Comparative Example 2 | Comparative Example 3 | Comparative Example 4 | Comparative Example 5 |
|---|---|---|---|---|---|---|
| CEG fiber (meq/kg) | | 33 | 35 | 38 | 41 | 41 |
| Initial modulus (g/d) | | 113 | 115 | 118 | 125 | 127 |
| Tensile tenacity (g/d) | | 8.5 | 8.8 | 7.7 | 6.2 | 5.3 |
| Breaking elongation (%) | | 16.4 | 16.7 | 15.7 | 14.2 | 12.9 |
| Dry contraction rate (%) | | 3.2 | 3.6 | 13.4 | 14.9 | 15.2 |
| Monofilament fineness (de) | | 1.25 | 6.0 | 6.0 | 3.0 | 3.3 |
| Total fineness (de) | | 200 | 240 | 600 | 700 | 800 |
| Number of filament | | 160 | 40 | 50 | 230 | 240 |
| Elongation (%) | At the stress of 1.0 g/d | 0.39 | 0.41 | 0.42 | 0.43 | 0.44 |
| | At the stress of 4.0g/d | 3.82 | 3.71 | 3.81 | 3.84 | 3.85 |
| | At the stress of 7.0g/d | 7.23 | 7.22 | 7.23 | 7.67 | 7.92 |

<u>Comparative Examples 6 to 10</u>

The polyester fiber of Comparative Examples 6 to 10 was prepared by the same method as Example 6, except for the conditions described in the following Table 7.

Particularly, in Comparative Examples 6 and 7, the esterification reaction was conducted by the same method as Example 6, except for using only terephthalic acid as dicarboxylic acid without isophthalic acid.

**[Table 7]**

| | Comparative Example 6 | Comparative Example 7 | Comparative Example 8 | Comparative Example 9 | Comparative Example 10 |
|---|---|---|---|---|---|
| iso-PA/TPA mole ratio | - | - | 0.14 | 0.22 | 0.3 |
| EG/ (TPA+iso-PA) mole ratio | 1.3 | 1.2 | 1.3 | 1.3 | 1.3 |
| Esterification reaction temperature(°C) | 292 | 295 | 290 | 288 | 285 |
| Esterification reaction time (hr) | 4 | 4 | 4 | 4 | 4 |
| Polycondensation reaction temperature(°C) | 295 | 295 | 290 | 290 | 288 |
| Polycondensation reaction time (hr) | 3.5 | 4.0 | 3.5 | 3.5 | 3.5 |
| Raw Chip IV(dl/g) | 0.67 | 0.67 | 0.66 | 0.65 | 0.64 |

(continued)

| | Comparative Example 6 | Comparative Example 7 | Comparative Example 8 | Comparative Example 9 | Comparative Example 10 |
|---|---|---|---|---|---|
| Solid state polymerization reaction temperature(°C) | 240 | 240 | 218 | 215 | 210 |
| Solid state polymerization reaction time(hr) | 24 | 26 | 28 | 29 | 34 |
| IV(dl/g) after solid state polymerization | 1.2 | 1.2 | 1.2 | 1.2 | 1.2 |
| Size of chip(g/100ea) | 3.5 | 3.5 | 3.5 | 3.5 | 3.5 |
| Spinning temperature(°C) | 305 | 303 | 295 | 295 | 295 |
| Winding speed(m/min) | 3,000 | 3,000 | 3,000 | 3,000 | 3,000 |
| Total draw ratio | 6.05 | 6.02 | 6.15 | 6.25 | 6.32 |
| Heat treatment temperature(°C) | 240 | 244 | 226 | 155 | 150 |
| Relaxation rate(%) | 4.0 | 5.0 | 3.2 | 11.2 | 12.0 |

The properties of the polyester fibers prepared according to Comparative Examples 6 to 10 are summarized in the following Table 8.

**[Table 8]**

| | | Comparative Example 6 | Comparative Example 7 | Comparative Example 8 | Comparative Example 9 | Comparative Example 10 |
|---|---|---|---|---|---|---|
| Crystallinity(%) | | 50.6 | 51.9 | 34.5 | 33.7 | 33.4 |
| Fiber intrinsic viscosity(dl/g) | | 0.83 | 0.85 | 0.88 | 0.85 | 0.80 |
| Fiber CEG (meq/kg) | | 35 | 38 | 36 | 37 | 37 |
| Initial modulus(g/d) | | 104 | 108 | 111 | 107 | 110 |
| Tensile tenacity (g/d) | | 8.4 | 8.8 | 7.9 | 6.5 | 5.4 |
| Breaking elongation(%) | | 16.3 | 16.5 | 15.7 | 15.7 | 15.9 |
| Dry contraction rate(%) | | 3.3 | 3.4 | 12.4 | 15.9 | 16.2 |
| Monofilament fineness(de) | | 1.25 | 6.0 | 6.0 | 3.0 | 3.3 |
| Total fineness (de) | | 200 | 240 | 600 | 700 | 800 |
| The number of filament | | 160 | 40 | 50 | 230 | 240 |
| elongation (%) | 0.4 | 0.42 | 0.43 | 0.44 | 0.46 | 0.44 |
| | 3.8 | 3.7 | 3.82 | 3.85 | 3.88 | 3.85 |
| | 7.1 | 7.0 | 7.5 | 7.8 | 7.9 | 7.92 |

Preparation Examples 1 to 10

Raw fabric for an airbag was woven from the polyester fiber prepared according to Examples 1 to 10 by using a Rapier Loom (warp×weft: 41×41 to 49×49), and was prepared into fabric for an airbag through the scouring and tentering processes. Then, a polyvinylchloride (PVC) resin was coated on the fabric in the coating amount of 20 $g/m^2$ with a knife-over-roll coating method to obtain PVC coated fabric.

The other conditions were based on general conditions for producing a polyester fabric.

The physical properties of the manufactured polyester fabric for an airbag were measured using the following method, and the results thereof are summarized in Tables 9 and 10 below.

(a) Tensile strength and breaking elongation

The fabric sample was cut from the fabric for an airbag, and fixed at the lower clamp of the apparatus for measuring the tensile strength according to ASTM D 5034 (standard of the American Society for Testing and Materials). Thereafter, while moving the upper clamp upwardly, the tensile strength and the elongation at the time when the fabric sample was broken were measured.

(b) Tear strength

The tearing strength of the fabric for an airbag was measured according to ASTM D 2261 (standard of the American Society for Testing and Materials).

(c) Warpwise and weftwise contraction rates

The warpwise and weftwise contraction rates of the polyester fabric were measured according to ASTM D 1776 (standard of the American Society for Testing and Materials). First, a sample is cut from the fabric for an airbag to a length of 20 cm which is a length before warpwise and weftwise contraction, and then heat-treated in a chamber at 149 °C for 1 hour, and then the length thereof was measured. Based on this measured length, the warpwise and weftwise contraction ratios {(length before contracted - length after contracted)/ length before contracted x 100%} were measured.

(d) Stiffness

The stiffness of the fabric was measured by a circular bend method using a stiffness tester according to ASTM D 4032 (standard of the American Society for Testing and Materials). Further, the stiffness thereof may be measured by a cantilever method. The stiffness thereof may be measured by measuring the length of the bent fabric using a cantilever meter which is a tester inclined at a predetermined angle in order to bend the fabric.

(e) Thickness

The thickness of the fabric for an airbag was measured according to ASTM D 1777 (standard of the American Society for Testing and Materials).

(f) Air permeability

The amount of air permeating the circular section (area: 38 $cm^2$) of a fabric for an airbag was measured after leaving the fabric under conditions of 20 °C and 65% RH for 1 day or more according to ASTM D 737 (standard of the American Society for Testing and Materials).

(g) Edgecomb resistance

The edgecomb resistance of the fabric, which was a noncoated fabric before coating treatment, was measured by the method according to ASTM D 6479 (standard of the American Society for Testing and Materials) at room temperature (25 °C)

**[Table 9]**

| | | Preparation Example1 | Preparation Example 2 | Preparation Example 3 | Preparation Example 4 | Preparation Example 5 |
|---|---|---|---|---|---|---|
| Tensile strength (kgf/inch) | | 237 | 240 | 242 | 244 | 255 |
| Breaking elongation (%) | | 38 | 41 | 43 | 46 | 49 |
| Tear strength (kgf) | | 25 | 26 | 27 | 27 | 26 |
| Fiber contraction rate (%) | Warpwise | 1.7 | 1.6 | 1.5 | 1.4 | 1.4 |
| | Weftwise | 1.6 | 1.5 | 1.5 | 1.4 | 1.3 |
| Stiffness (kgf) | | 0.36 | 0.38 | 0.40 | 0.41 | 0.42 |
| Air permeability (cfm) | | 0.43 | 0.40 | 0.48 | 0.53 | 0.55 |
| Edgecomb resistance (N) | | 590 | 570 | 527 | 522 | 480 |

**[Table 10]**

| | | Preparation Example 6 | Preparation Example 7 | Preparation Example 8 | Preparation Example 9 | Preparation Example 10 |
|---|---|---|---|---|---|---|
| Tensile strength (kgf/inch) | | 236 | 239 | 242 | 243 | 253 |
| Breaking elongation (%) | | 40 | 43 | 44 | 46 | 48 |
| Tear strength (kgf) | | 26 | 25 | 24 | 24 | 23 |
| Fiber contraction rate (%) | Warpwise | 1.3 | 1.3 | 1.4 | 1.4 | 1.5 |
| | Weftwise | 1.3 | 1.2 | 1.3 | 1.4 | 1.4 |
| Stiffness (kgf) | | 0.42 | 0.40 | 0.37 | 0.35 | 0.33 |
| Air permeability (cfm) | | 0.53 | 0.50 | 0.48 | 0.45 | 0.42 |
| Edgecomb resistance (N) | | 496 | 515 | 525 | 540 | 570 |

Comparative Preparation Examples 1 to 10

Polyester fabric for an airbag was produced in the same manner as in Preparation Example 1, except for using the polyester fiber produced in Comparative Examples 1 to 10, and the physical properties thereof were measured, and the results thereof are given in Tables 11 and 12 below.

**[Table 11]**

| | | Comparative Preparation Example 1 | Comparative Preparation Example 2 | Comparative Preparation Example 3 | Comparative Preparation Example 4 | Comparative Preparation Example 5 |
|---|---|---|---|---|---|---|
| Tensile strength (kgf/inch) | | 222 | 224 | 205 | 180 | 165 |
| Breaking elongation (%) | | 32 | 30 | 30 | 28 | 25 |
| Tear strength (kgf) | | 15 | 14 | 16 | 13 | 10 |
| Fiber contraction rate (%) | Warpwise | 0.5 | 0.5 | 3.5 | 5.2 | 6.5 |
| | Weftwise | 0.4 | 0.4 | 2.9 | 4.5 | 6.4 |
| Stiffness(kgf) | | 1.67 | 1.70 | 1.65 | 1.77 | 1.66 |
| Air permeability (cfm) | | 1.58 | 1.48 | 1.67 | 1.44 | 1.45 |
| Edgecomb resistance (N) | | 256 | 213 | 315 | 357 | 360 |

[Table 12]

| | | Comparative Preparation Example 6 | Comparative reparation Example7 | Comparative Preparation Example8 | Comparative Preparation Example 9 | Comparative Preparation Example 10 |
|---|---|---|---|---|---|---|
| Tensile strength (kgf/inch) | | 224 | 226 | 198 | 195 | 196 |
| Breaking elongation (%) | | 31 | 29 | 34 | 35 | 35 |
| Tear strength (kgf) | | 15 | 14 | 16 | 15 | 13 |
| Fiber contraction rate (%) | Warpwise | 0.5 | 0.5 | 3.0 | 5.2 | 6.8 |
| | Weftwise | 0.4 | 0.4 | 2.8 | 4.9 | 5.4 |
| Stiffness(kgf) | | 1.5 | 1.7 | 1.6 | 1.7 | 1.6 |
| Air permeability (cfm) | | 1.53 | 1.42 | 1.55 | 1.54 | 1.53 |
| Edgecomb resistance (N) | | 250 | 223 | 305 | 350 | 322 |

As shown in Table 9, it was confirmed that the fabric for an airbag of Preparation Examples 1 to 5 using the polyester fiber of Examples 1 to 5 that are prepared by reacting glycol with aromatic dicarboxylic acid and aliphatic dicarboxylic acid in the optimum ratio may exhibit significantly improved stiffness and high edgecomb resistance. Particularly, the fabric for an airbag of Preparation Examples 1 to 5 has tensile strength and air permeability of 237 to 255 kgf/inch and 0.43 to 0.55 cfm, respectively, and thus it can be seen that they exhibit excellent mechanical properties and unfolding performance. And, the fabric for an airbag of Preparation Examples 1 to 5 may achieve significantly improved stiffness and edgecomb resistance of 0.36 to0.42 kgf and 480 to 590 N, respectively, and thus, it can be seen that excellent packing property, shape stability and gas barrier effect may be simultaneously obtained.

And, as shown in Table 10, the fabric for an airbag of Preparation Examples 6 to 10 using the polyester fiber of Examples 6 to 10 that are prepared by reacting terephthalic acid and isophthalic acid with glycol in the optimum ratio may exhibit significantly improved stiffness and high edgecomb resistance. Particularly, the fabric for an airbag of Preparation Examples 6 to 10 have tensile strength and air permeability of 236 to 253 kgf/inch and 0.42 to 0.53 cfm, respectively, and thus, it can be seen that they may exhibit excellent mechanical properties and unfolding performance. And, the fabric for an airbag of Preparation Examples 6 to 10 may also exhibit significantly improved stiffness and edgecomb resistance of 0.33 to 0.42 kgf and 496 to 570 N, respectively, and thus, it can be seen that excellent packing property, shape stability and gas barrier effect may be simultaneously obtained.

To the contrary, as shown in Table 11, the polyester fabric of Comparative Preparation Examples 1 to 5 using the polyester fiber of Comparative Examples 1 to 5 has significantly lowered mechanical properties and air tightness, and fails to satisfy the properties required for fabric for an airbag. Particularly, stiffness and air permeability significantly increase to 1.65 to 1.77 kgf and 1.44 to 1.67 cfm, respectively, and thus, it can be seen that air tightness is significantly lowered when the airbag is installed. And, tensile strength and edgecomb resistance significantly decrease to 165 to 224 kgf/inch and 213 to 360 N, respectively. As such, if edgecomb resistance and tensile strength are significantly low, the properties required for fabric for an airbag may not be satisfied, and thus, an airbag may be ruptured when the airbag is unfolded.

And, as shown in Table 12, the polyester fabric of Comparative Preparation Examples 6 to 10 using the polyester fiber of Comparative Examples 6 to 10 has significantly lowered mechanical properties and air tightness, and fails to satisfy the properties required for fabric for an airbag. Particularly, stiffness and air permeability significantly increase to 1.5 to 1.7 kgf and 1.42 to 1.55 cfm, and thus, it can be seen that air tightness may be significantly lowered when the airbag is installed. And, tensile strength and edgecomb resistance significantly decrease to 196 to 224 kgf/inch and 223 to 350 N. As such, if edgecomb resistance and tensile strength are significantly low, the properties required for fabric for an airbag may not be satisfied, and thus, airbag may be ruptured when the airbag is unfolded.

## Claims

**1.** A process for producing polyester fiber comprising the steps of:

conducting an esterification reaction of a dicarboxylic acid composition comprising at least two kinds of dicarboxylic acid compounds with glycol;

conducting a polycondensation reaction of the oligomer produced by the esterification;
conducting a solid state polymerization of the polymer produced by the polycondensation; and
melt spinning and drawing the polyester chip produced by the solid state polymerization,
wherein the dicarboxylic acid composition comprises aromatic dicarboxylic acid having carbon number of 6 to 24 and aliphatic dicarboxylic acid having carbon number of 2 to 24, and the mole ratio of the aromatic dicarboxylic acid and the aliphatic dicarboxylci acid is 1:0.01 to 1:0.15; or the dicarboxylic acid composition comprises terephthalic acid and at least one isomer of terephthalic acid selected from the group consisting of isophthalic acid and phthalic acid, and the mole ratio of the terephthalic acid and the isomer is 1:0.01 to 1:0.12, and
the mole ratio of the total amount of the dicarboxylic acid compounds and the glycol is 1:1 to 1:1.5.

**2.** The process according to Claim 1, wherein the polycondensation is conducted at a temperature of 250 to 290 °C.

**3.** The process according to Claim 1, wherein the solid state polymerization is conducted at a temperature of 170 to 240 °C.

**4.** The process according to Claim 1, wherein the aromatic dicarboxylic acid is at least one selected from the group consisting of terephthalic acid, isophthalic acid, phthalic acid, diphenyletherdicarboxylic acid, biphenyldicarboxylic acid, 1,4-naphthalene dicarboxylic acid, 1,5-naphthalene dicarboxylic acid, and ester-forming derivatives thereof.

**5.** The process according to Claim 1, wherein the aliphatic dicarboxylic acid is at least one selected from the group consisting of oxalic acid, malonic acid, succinic acid, glutaric acid, adipic acid, pimelic acid, suberic acid, azelaic acid, sebacic acid, and ester-forming derivatives thereof.

**6.** The process according to Claim 1, wherein the glycol is at least one selected from the group consisting of aliphatic diol having carbon number of 2 to 16, cycloaliphatic diol having carbon number of 6 to 24, aromatic diol having carbon number of 6 to 24, and ethylene oxide or propylene oxide adducts thereof.

**7.** The process according to Claim 1, wherein the polymer produced by the polycondensation has intrinsic viscosity of 0.25 dl/g or more.

**8.** The process according to Claim 1, wherein the polymer produced by the polycondensation is cut to a chip size of 1.0 g/100ea to 3.0 g/100ea, and then solid state polymerization is conducted.

**9.** The process according to Claim 1, wherein the solid state polymerization is conducted for 10 hours or more.

**10.** The process according to Claim 1, wherein the polyester chip produced by the solid state polymerization comprises 70 mol % or more of polyethyleneterephthalate.

**11.** The process according to Claim 1, wherein the polyester chip produced by the solid state polymerization has intrinsic viscosity of 0.7 dl/g or more.

**12.** The process according to Claim 1, wherein the polyester chip produced by the solid state polymerization is melt spun at 260 to 300 °C.

**13.** The process according to Claim 1, wherein the polyester chip produced by the solid state polymerization is melt spun at a spinning speed of 300 m/min to 1,000 m/min.

**14.** The process according to Claim 1, wherein the polyester chip produced by the solid state polymerization is melt spun and drawn to total draw ratio of 5.0 to 6.5.

**15.** The process according to Claim 1, further comprising heat fixing at a temperature of 130 to 250 °C, after the drawing step.

**16.** The process according to Claim 1, further comprising the step of relaxing with a relaxation rate of 1% to 10%, after the drawing step.

**17.** Polyester fiber produced by the process according to any one of Claims 1 to 16.

**18.** The polyester fiber according to Claim 17, wherein the polyester fiber has crystallinity of 35% to 60%.

**19.** The polyester fiber according to Claim 17, wherein the polyester fiber has tensile tenacity of 7.5 g/ d or more, and breaking elongation of 13 % or more.

**20.** The polyester fiber according to Claim 17, wherein the polyester fiber has elongation of 0.5% or more at the stress of 1.0 g/d, elongation of 4.3% or more at the stress of 4.0 g/d, and elongation of 7.5% or more at the stress of 7.0 g/d, as measured at room temperature.

**21.** The polyester fiber according to Claim 17, wherein the polyester fiber has initial modulus of 40 to 100 g/ d.

**22.** Polyester fabric including the polyester fiber according to Claim 17.

**23.** The polyester fabric according to Claim 22, wherein the fabric has tear strength of 23 kgf or more, as measured according to ASTM D 2261 method.

**24.** The polyester fabric according to Claim 22, wherein the fabric has edgecomb resistance of 360 N or more, as measured according to ASTM D 6479 method at room temperature (25 °C).

**25.** The polyester fabric according to Claim 22, wherein the fabric has stiffness of 1.2 kgf or less, as measured according to ASTM D 4032 method.

FIG. 1

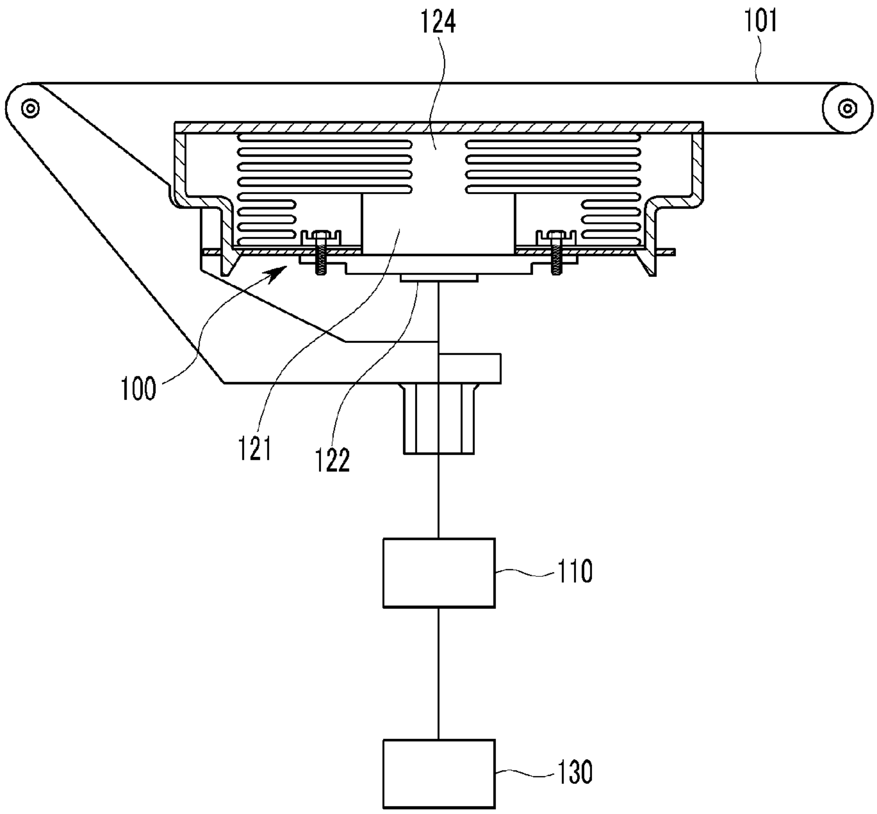

FIG. 2

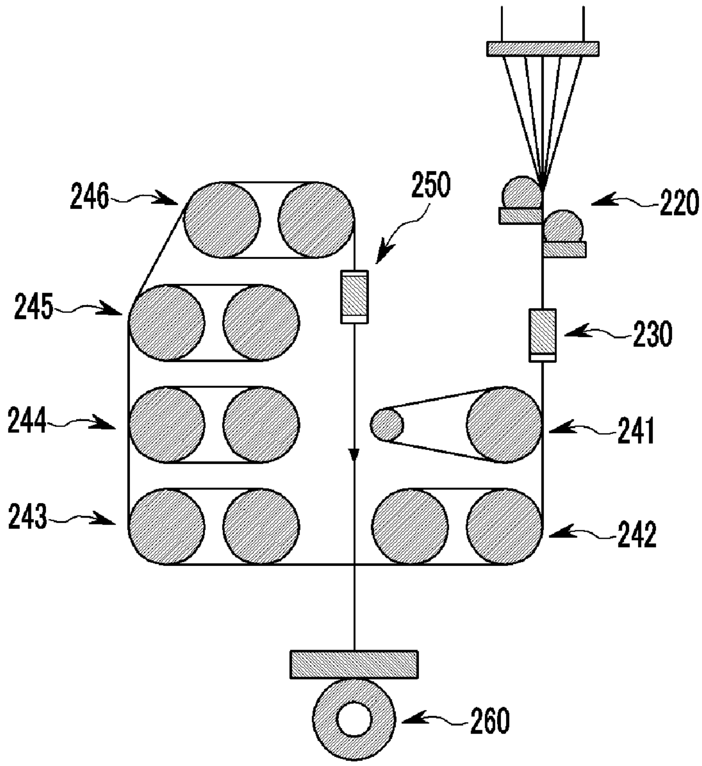

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP HEI04214437 B